# EUROPÄISCHE PATENTANMELDUNG

(11) **EP 1 927 631 A1**
(43) Veröffentlichungstag der Anmeldung: **04.06.2008**
(21) Anmeldenummer: 07121295.5
(22) Anmeldetag: 22.11.2007
(51) Int. Cl.: C08L 83/04, C08K 3/10

(54) **Flüssigsiliconkautschuk**

(30) Priorität: 29.11.2006 DE 102006056378
(71) Anmelder: Wacker Chemie AG, 81737 München (DE)
(72) Erfinder: Jerschow, Peter, 84489, Burghausen (DE); Schaffer, Erich, 6065, Thaur (AT)
(74) Vertreter: Gössmann, Christoph Tassilo

(57) **Zusammenfassung**

Verfahren zur Herstellung von härtbaren Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen,
(D) Katalysator,

dadurch gekennzeichnet, dass (A) und (B) oder (A) und (D) in einer Menge von 100 Gewichtsteilen zunächst in einen Behälter abgefüllt werden und später werden entweder 0,3 bis 5 Gewichtsteile (D), bezogen auf die Katalysatorformulierung, zu (A) und (B) oder 0,3 bis 5 Gewichtsteile (B) zu (A) und (D) in den Mischer einer kunststoffverarbeitenden Maschine zudosiert werden.

## Beschreibung

Die Erfindung betrifft ein Verfahren zur Herstellung von härtbaren Organopolysiloxanmassen.

Üblicherweise besteht bisher Flüssigsiliconkautschuk oder LSR (Liquid Silicone Rubber) oder LIM (liquid injection moulding) aus 2 Komponenten (A und B), die im Verhältnis 1:1 oder 9:1 in einen statischen Mischer gepumpt werden. Dieses Gemisch kann dann von einer Spritzgussmaschine oder einem anderen Aggregat zu Formteilen, Extrudaten oder Beschichtungen weiterverarbeitet werden.

Beide Komponenten bestehen zumindest aus Polydimethylsiloxan (auch andere Substituenten als Methylgruppen denkbar; Viskositäten 0,65 - 10000000 mPas) mit Vinylgruppen. Um die endgültigen Eigenschaften zu erreichen werden meistens noch Füllstoffe und Additive zugegeben.

Füllstoffe können aktiv (verstärkend) oder inaktiv sein, je nachdem, welche Anforderungen an den LSR gestellt werden. Aktive Füllstoffe sind beispielsweise hochdisperse Kieselsäure, hydrophob oder hydrophil, gefällte Kieselsäure, hydrophob oder hydrophil, Aluminiumoxid, hydrophob oder hydrophil etc. Als inaktive Füllstoffe sind beispielsweise Quarzmehl, Talkum, Wollastonit, etc. im Einsatz.

Der A-Komponente wird ein Platinkatalysator (beispielsweise Hexachloroplatinsäure oder der Vinylsiloxankomplex) beigegeben. Der B-Komponente wird eine Si-H-Verbindung beigegeben, die mindestens 2 oder 3 H-Atome pro Molekül enthält. Zur Regulierung der Vernetzungsgeschwindigkeit wird ein Inhibitor entweder in die A- oder B-Komponente gegeben.

Weiterhin ist es möglich, einer oder beiden Komponenten Haftvermittler oder mit der Matrix unverträgliche Öle, beispielsweise Phenylsiliconöl oder Hitzestabilisatoren (Metalloxide, - octoate, Ruße) beizugeben.

Diese A- und B-Komponenten, 1:1 bis 9:1 gemischt, vernetzen üblicherweise bei der Herstellung eines Schnullers mit 5 g Schussgewicht innerhalb von 25 s bei einer Vulkanisationstemperatur von 180°C.
Das A-B-Gemisch bleibt bei Raumtemperatur für eine Dauer von mindestens 3 Tagen so flüssig, dass bei einer Produktionsunterbrechung neu gestartet werden kann.

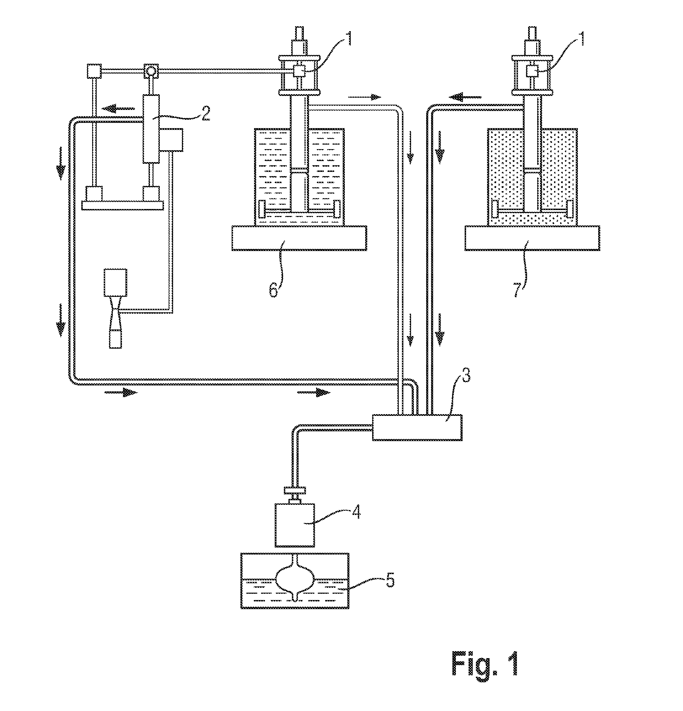

LSR Verarbeitung nach dem Stand der Technik wird in Figur 1 gezeigt:

Bei diesem Schema werden die 2 Komponenten (Component A) und (Component B) im Mischungsverhältnis 1:1 oder 9:1 in den statischen oder dynamischen Mischer (3) gepumpt. Über eine Additivlinie (2) kann Farbe dosiert werden. Von dort aus kann die entstandene Masse in der Form (4) und (5) weiterverarbeitet werden.

Gegenstand der vorliegenden Erfindung ist ein Verfahren zur Herstellung von härtbaren Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen,
(D) Katalysator,
dadurch gekennzeichnet, dass (A) und (B) oder (A) und (D) in einer Menge von 100 Gewichtsteilen zunächst in einen Behälter abgefüllt werden und später werden entweder vorzugsweise 0,3 bis 5, bevorzugt 0,3 bis 4, weiter bevorzugt 0,3 bis 3, besonders bevorzugt 0,3 bis 2, ganz besonders bevorzugt 0,3 bis 1, weiter bevorzugt 1 Gewichtsteil (D), bezogen auf die Katalysatorformulierung, zu (A) und (B) oder vorzugsweise 0,3 bis 5 Gewichtsteile, bevorzugt 0,3 bis 4, weiter bevorzugt 0,3 bis 3, besonders bevorzugt 0,3 bis 2, ganz besonders bevorzugt 0,3 bis 1, weiter bevorzugt 1 (B) zu (A) und (D) in den Mischer einer kunststoffverarbeitenden Maschine, wie vorzugsweise eine Spritzgussmaschine, ein Rakelgerät, Extruder, Kalanderanlage etc., bevorzugt eine Spritzgussmaschine vorzugsweise über eine Pumpstation zudosiert werden.

Katalysator (D) dient als Hydrosilylierungskatalysator für die als Hydrosilylierung bezeichnete Additionsreaktion zwischen den aliphatisch ungesättigten Kohlenwasserstoffresten der Diorganopolysiloxane (A) und den siliciumgebundenen Wasserstoffatomen der Organohydrogenpolysiloxane (B). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (D) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z.B. (Ph₃P)₂PtCl₂. Besonders bevorzugt sind Komplexe des Platins mit Vinylsiloxanen, wie sym-Divinyltetramethyldisiloxan, wobei der 1,3-Divinyl-1,1,3,3-tetramethyldisiloxan-Pt-komplex besonders bevorzugt ist.

Die Menge des eingesetzten Hydrosilylierungskatalysators (D) richtet sich nach der gewünschten Vernetzungsgeschwindigkeit sowie ökonomischen Gesichtpunkten. Üblicherweise werden pro 100 Gew.-Teile Diorganopolysiloxane (A) vorzugsweise 1 x 10⁻⁸ bis 5 x 10⁻² Gew.-Teile, insbesondere 1 x 10⁻⁶ bis 1 x 10⁻² Gew.-Teile Platin-Katalysatoren, berechnet als Platin-Metall eingesetzt. (Die erfindungsgemäßen Massen enthalten Platinkatalysatoren (D) in solchen Mengen, daß ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Masse, resultiert.)

Des weiteren Platinkatalysator ausgewählt aus der Gruppe bestehend aus
Verbindungen der Formel 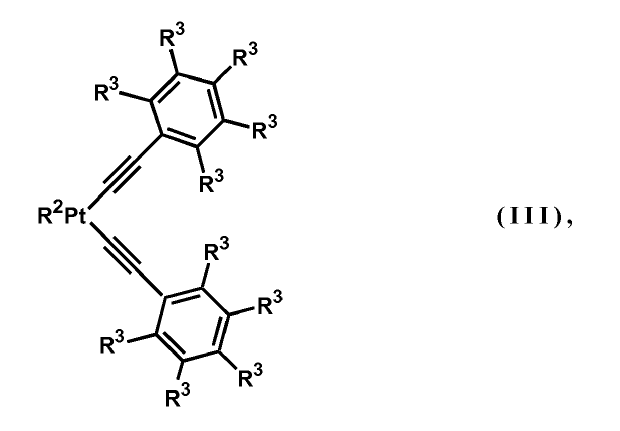 und/oder oligomeren oder polymeren Verbindungen, die aus Struktureinheiten der allgemeinen Formel 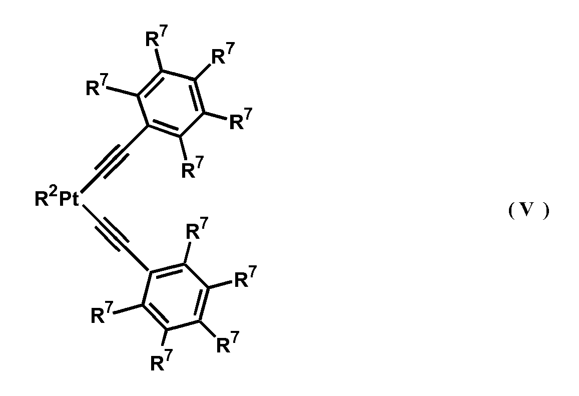 und gegebenenfalls Struktureinheiten der allgemeinen Formel

R⁹ᵣSiO_{(4-r)/2} (VI)

zusammengesetzt sind,
wobei
- **R²**: ein gegebenenfalls substituiertes Dien bedeutet, das durch mindestens eine **π**-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
- **R³**: gleich oder verschieden sein kann und Wasserstoffatom, Halogenatom, -SiR⁴₃, -OR⁶ oder einwertige, gegebenenfalls substituierte Kohlenwasserstoffreste mit 1 bis 24 Kohlenstoffatomen bedeutet, mit der Maßgabe, daß in den Verbindungen der Formel (III) mindestens ein Rest R³ die Bedeutung von -SiR⁴₃ hat,
- **R⁴**: gleich oder verschieden sein kann und Wasserstoff, Halogenatom, -OR⁶ oder einwertige, gegebenenfalls substituierte Kohlenwasserstoffreste mit 1 bis 24 Kohlenstoffatomen bedeutet,
- **R⁶**: gleich oder verschieden sein kann und Wasserstoffatom, -SiR⁴₃ oder ein einwertiger gegebenenfalls substituierter Kohlenwasserstoffrest mit 1 bis 20 Kohlenstoffatomen ist,
- **R⁷**: gleich oder verschieden sein kann und Wasserstoffatom, Halogenatom, -SiR⁴₃, -SiR⁴₍₃₋ₜ₎[R⁸SiR⁹ₛO_{(3-s)/2}]ₜ, -OR⁶ oder einwertige, gegebenenfalls substituierte Kohlenwasserstoffreste mit 1 bis 24 Kohlenstoffatomen bedeutet, mit der Maßgabe, daß in Formel (V) mindestens ein Rest R⁷ die Bedeutung von -SiR⁴₍₃₋ₜ₎[R⁸SiR⁹ₛO_{(3-s)/2}]ₜ hat,
- **R⁸**: gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
- **R⁹**: gleich oder verschieden sein kann und Wasserstoff oder einen organischen Rest bedeutet,
- r: 0, 1, 2 oder 3 ist,
- s: 0, 1, 2 oder 3 bedeutet und
- t: 1, 2 oder 3 ist.

Falls es sich bei R² um ein substituiertes Dien bzw. bei den Resten R³, R⁴, R⁵, R⁶, R⁷ und R⁸ um substituierte Kohlenwasserstoffreste handelt, sind als Substituenten Halogenatome, wie F, Cl, Br und J, Cyanoreste, -NR⁶₂, Heteroatome, wie O, S, N und P, sowie Gruppen -OR⁶ bevorzugt, wobei R⁶ die oben genannte Bedeutung hat.

Bei dem erfindungsgemäß eingesetzten Platinkatalysator (D) handelt es sich bevorzugt um Bis(alkinyl)(1,5-cyclooctadien)-platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe.

Besonders bevorzugt sind Komplexe des Platins mit Vinylsiloxanen, wie sym-Divinyltetramethyldisiloxan, wobei der 1,3-Divinyl-1,1,3,3-tetramethyldisiloxan-Pt-komplex ganz besonders bevorzugt ist.

Die Menge des erfindungsgemäß eingesetzten Platinkatalysators (D) richtet sich nach der gewünschten Vernetzungsgeschwindigkeit und der jeweiligen Verwendung sowie ökonomischen Gesichtspunkten. Die erfindungsgemäßen Massen enthalten Platinkatalysatoren (D) in solchen Mengen, daß ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Masse, resultiert.

Im Rahmen der vorliegenden Erfindung sollen von dem Begriff Organopolysiloxane sowohl polymere, oligomere wie auch dimere Siloxane mit umfasst werden.

Bei der im erfindungsgemäßen Verfahren eingesetzten Zusammensetzung kann es sich um Einkomponenten-Organopolysiloxanmassen wie auch um Zweikomponenten-Organopolysiloxanmassen handeln. In letzterem Fall können die beiden Komponenten der erfindungsgemäßen Massen alle Bestandteile in beliebiger Kombination enthalten, im allgemeinen mit der Maßgabe, daß eine Komponente nicht gleichzeitig Siloxane mit aliphatischer Mehrfachbindung, Siloxane mit Si-gebundenem Wasserstoff und Katalysator, also im wesentlichen nicht gleichzeitig die Bestandteile (A), (B) und (D) bzw. (C) und (D), enthält. Erfindungsgemäße Zusammensetzungen können auch vorzugsweise als Einkomponentenmassen bezeichnet werden.

Die in den erfindungsgemäßen Massen eingesetzten Verbindungen
(A) und (B) werden bekanntermaßen so gewählt, daß eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung

(A) weist mindestens drei aliphatisch ungesättigte Reste auf und Siloxan (B) mindestens zwei Si-gebundene Wasserstoff- atome, oder aber anstelle von Verbindung (A) und (B) wird Siloxan
(C) eingesetzt, welches aliphatisch ungesättigte Reste und Si-gebundene Wasserstoffatome in den obengenannten Verhältnissen aufweist.

Bei der erfindungsgemäß eingesetzten Verbindung (A) kann es sich auch um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyloctadien-(1,7), N,N'-Methylen-bis-(acrylsäureamid), 1,1,1-Tris(hydroxy-methyl)-propan-triacrylat, 1,1,1-Tris(hydroxymethyl)-propan-trimethacrylat, Tripropylenglykoldiacrylat, Diallylether, Di-allylamin, Diallylcarbonat, N,N'-Diallylharnstoff, Triallyl-amin, Tris(2-methylallyl)amin, 2,4,6-Triallyloxy-1,3,5-triazin, Triallyl-s-triazin-2,4,6(1H,3H,5H)-trion, Diallylmalonsäure-ester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

RₐR¹_{b}SiO_{(4-a-b)/2} (I)

eingesetzt, wobei
**R** gleich oder verschieden sein kann und einen von aliphatischen Kohlenstoff-Kohlenstoff-Mehrfachbindungen freien, organischen Rest bedeutet,
**R¹** gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
**a** 0, 1, 2 oder 3 ist und
**b** 0, 1 oder 2 ist
mit der Maßgabe, daß die Summe a + b kleiner oder gleich 3 ist und im Durchschnitt mindestens 2 Reste R¹ je Molekül vorliegen.

Bei Rest **R** kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (I) miteinander verbinden.

R umfasst die einwertigen Reste -F, -Cl, -Br, -OR**⁶**, -CN, -SCN, -NCO und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste.

Falls es sich bei Rest **R** um SiC-gebundene, substituierte Kohlenwasserstoffreste handelt, sind als Substituenten Halogenatome, phosphorhaltige Reste, Cyanoreste, -OR⁶, -NR⁶-, -NR⁶₂, -NR⁶-C(O)-NR⁶₂, -C(O)-NR⁶₂, -C(O)-R⁶, -C(O)OR⁶, -SO₂-Ph und -C₆F₅ mit R⁶ gleich der obengenannten Bedeutung und Ph gleich Phenylrest bevorzugt.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecyl-rest, und Octadecylreste, wie der n-Octadecylrest, Cycloalkylreste, wie Cyclopentyl-, Cyclohexyl-, Cycloheptyl- und Methyl-cyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste **R** sind Halogenalkylreste, wie der 3,3,3-Trifluor-n-propylrest, der 2,2,2,2',2',2'-Hexafluor-isopropylrest, der Heptafluorisopropylrest, Halogenarylreste, wie der o-, m- und p-Chlorphenylrest, -(CH**₂**)**ₙ-**N(R**⁶**)C(O)NR**⁶₂**,
-(CH**₂**)**ₙ**-C(O)NR**⁶₂**, -(CH**₂**)**ₙ**-C(O)R**⁶**, -(CH**₂**)**ₙ**-C(O)OR**⁶**, -(CH**₂**)**ₙ-**C(O)NR**⁶₂**,
-(CH**₂**)**ₙ**-C(O)-(CH**₂**)**ₘ**-C(O)CH**₃**, -(CH**₂**)**ₙ**-NR**⁶**-(CH**₂**)**ₘ**-NR**⁶₂**,
-(CH**₂**)**ₙ**-O-CO-R**⁶**, -(CH**₂**)**ₙ**-O-(CH**₂**)**ₘ**-CH(OH)-CH**₂**OH,
-(CH**₂**)**ₙ**-(OCH**₂**CH**₂**)**ₘ**-OR**⁶**, -(CH**₂**)**ₙ**-SO**₂**-Ph und -(CH**₂**)**ₙ**-O-C**₆**F**₅**, wobei R**⁶** eine oben dafür angegebene Bedeutung hat, n und m gleiche oder verschiedene ganze Zahlen zwischen 0 und 10 sind und Ph den Phenylrest bezeichnet.

Beispiele für **R** gleich zweiwertige, beidseitig gemäß Formel (I) Si-gebundene Reste sind solche, die sich von den voranstehend für Rest R genannten einwertigen Beispiele dadurch ableiten, daß eine zusätzliche Bindung durch Substitution eines Wasserstoffatoms erfolgt. Beispiele für derartige Reste sind -(CH₂)ₙ-, -CH(CH₃)-, -C(CH₃)₂-, -CH(CH₃)-CH₂-, -C₆H₄-, -CH(Ph)-CH₂-, -C(CF**₃**)**₂**-, -(CH**₂**)**ₙ**-C₆H₄-(CH**₂**)**ₙ**-, -(CH**₂**)**ₙ**-C₆H₄-C₆H₄-(CH**₂**)**ₙ**-, -(CH**₂**O**)**ₘ-, -(CH**₂**CH**₂**O)**ₘ**-, -(CH**₂**)**ₙ**-O**ₓ**-C₆H₄-SO**₂**-C₆H₄-O**ₓ**-(CH**₂**)ₙ-, wobei x 0 oder 1 ist, m und n die voranstehend genannte Bedeutung haben sowie Ph gleich Phenylrest ist.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R¹** kann es sich um beliebige, einer Anlagerungsreaktion (Hydrosilylierung) mit einer SiH-funktionellen Verbindung zugängliche Gruppen handeln.

Falls es sich bei Rest **R¹** um SiC-gebundene, substituierte Kohlenwasserstoffreste handelt, sind als Substituenten Halogenatome, Cyanoreste und -OR⁶ bevorzugt, wobei R⁶ die obengenannte Bedeutung hat.

Bevorzugt handelt es sich bei Rest **R¹** um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10**²** und 10**⁶** g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10**⁵** g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R**₃**SiO**_{1/2}**, R**¹**R**₂**SiO**_{1/2}**, R**¹**RSiO**_{2/2}** und R**₂**SiO**_{2/2}** zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO**_{3/2},** R**¹**SiO**_{3/2}** und SiO**_{4/2}** bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der Formel

R_{C}H_{d}SiO_{(4-c-d)/2} (II)

eingesetzt, wobei
**R** gleich oder verschieden sein kann und die oben angegebene Bedeutung hat,
**c** 0, 1, 2 oder 3 ist und
**d** 0, 1 oder 2 ist,
mit der Maßgabe, daß die Summe von c + d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10**²** und 10**⁶** g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO**_{1/2}**, HR**₂**SiO**_{1/2}**, HRSiO**_{2/2}** und R**₂**SiO**_{2/2}** zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO**_{3/2}**, HSiO**_{3/2}** und SiO**_{4/2}** bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen gegebenenfalls zugleich auch aliphatisch ungesättigte Gruppen enthalten. Besonders bevorzugt ist die Verwendung niedermolekularer SiH-funktioneller Verbindungen, wie Tetrakis(dimethyl-siloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, daß das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Bis(alkinyl)(η-olefin)platin-Verbindungen und Verfahren zu ihrer Herstellung sind dem Fachmann zu einem kleinen Teil bekannt. Hierzu sei beispielsweise auf J. Chem.Soc., Dalton Trans. (1986) 1987-92 und Organometallics (1992) 11 2873-2883 verwiesen. Die erfindungsgemäßen Platinkatalysatoren (D) können nach analogen Synthese- und Reinigungsschritten hergestellt werden.

Bei dem erfindungsgemäß eingesetzten Platinkatalysator (D) handelt es sich bevorzugt um Bis(alkinyl)(1,5-cyclooctadien)-platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe.

Bei dem erfindungsgemäß eingesetzten Platinkatalysator (D) kann es sich auch um Komplexe des Platins mit Vinylsiloxanen handeln, wie sym-Divinyltetramethyldisiloxan, wobei der 1,3-Divinyl-1,1,3,3-tertramethyldisiloxan-Pt-komplex besonders bevorzugt ist.

Die Menge des erfindungsgemäß eingesetzten Platinkatalysators (D) richtet sich nach der gewünschten Vernetzungsgeschwindigkeit und der jeweiligen Verwendung sowie ökonomischen Gesichtspunkten. Die erfindungsgemäßen Massen enthalten Platinkatalysatoren (D) in solchen Mengen, daß ein Platingehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Masse, resultiert.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.%, vorzugsweise bei 0 bis 50 Gew.-%.

Die erfindungsgemäße Siliconkautschukmasse kann wahlweise als Bestandteil (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw.

Enthalten sein können des weiteren Zusätze (G), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO**_{2/2}**-Gruppen und/oder R**₂**vinylSiO**_{1/2}**-Endgruppen, wie Divinyltetramethyldisiloxan, Tetravinyldimethyldisiloxan, Trialkylcyanurate, Alkylmaleate, wie Diallylmaleat, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (G) hängt von ihrer chemischen Struktur ab, so daß sie individuell bestimmt werden muß.

Der Inhibitorgehalt der erfindungsgemäßen Massen beträgt vorzugsweise 0 bis 50 000 ppm, besonders bevorzugt 20 bis 2000 ppm, insbesondere 100 bis 1000 ppm.

Die erfindungsgemäßen Organopolysiloxanmassen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Insbesondere können die erfindungsgemäßen Massen, falls sie hochviskos sind, in Form eines Granulates zubereitet werden. Hierbei kann das einzelne Granulatteilchen alle Komponenten enthalten, oder die erfindungsgemäß eingesetzten Komponenten D und B sind getrennt in verschiedenen Granulatteilchen eingearbeitet. Hinsichtlich der elastomeren Eigenschaften der vernetzten erfindungsgemäßen Siliconmassen wird gleichfalls das gesamte Spektrum umfaßt, beginnend bei extrem weichen Silicongelen, über gummiartige Materialien bis hin zu hochvernetzten Siliconen mit glasartigem Verhalten.

Die Herstellung der erfindungsgemäßen Organopolysiloxanmassen kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung der Mischung aus (A) und (B), gegebenenfalls (E), (F) und (G) zu einer Zusammensetzung, die in einen Behälter abgefüllt ist. Der erfindungsgemäß eingesetzte Platinkatalysator (D) kann dabei als Festsubstanz in Dispersion oder als Lösung - in einem geeigneten Lösungsmittel gelöst - oder als sog. Batch - später zugegeben werden. Die Vermischung erfolgt unmittelbar vor der Verarbeitung mit statischen oder dynamischen Mischer, siehe unten. Der Katalysator (D) wird vorzugsweise über eine Additivpumpe zugepumpt,

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden.

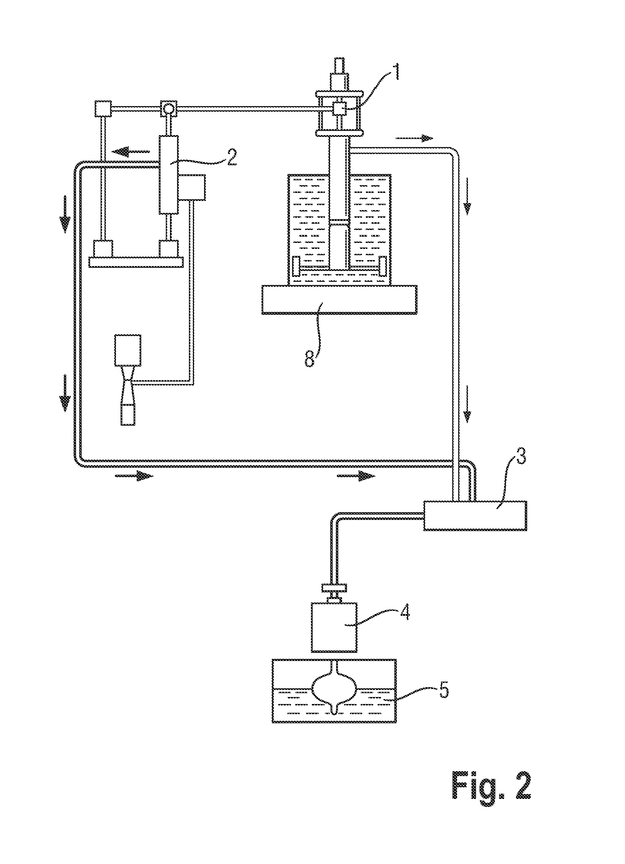

Das erfindungsgemäße Verarbeitungsverfahren wird in Figur 2 beschrieben:

Die Großkomponente wird zu 100 Teilen von der Meßvorrichtung (1) und der Pt-Katalysator zu 1 - 2 Teilen von der Meßvorrichtung (2) zum Mischer (3) gepumpt. Anschließend gelangt das gemischte reaktive Material zur Verarbeitung. Bevorzugterweise ist das das Spritzaggregat einer Spritzgussmaschine. Anschließend wird es bevorzugt in eine beheizte Kaltkanalform (4, 5) eingespritzt und zu einem Formteil ausvulkanisiert.

Überraschend wurde bei der Erfindung festgestellt, dass die Zykluszeit für einen Schnuller von 5 g Teilegewicht nun nur noch die Hälfte gegenüber einem herkömmlichen Flüssigsilicon im Mischungsverhältnis von 1:1 oder 9:1 beträgt.

Zusätzliche Vorteile ergeben sich dadurch, dass die Hauptkomponente nun Bestandteile enthalten darf, die mit dem Pt-Katalysator unverträglich sind. Durch die kurze Kontaktzeit zwischen Pt-Katalysator und den damit unverträglichen Substanzen wird seine Aktivität vor der Verarbeitung nicht beeinträchtigt.

Weiterhin kann durch geschickte Variation der Menge des Pt-Katalysators die Vulkanisationsgeschwindigkeit den jeweiligen Verarbeitungserfordernissen angepasst werden. Daraus ergibt sich ein Einsparpotenzial, welches mit 9:1 oder 1:1-Systemen nicht erreicht werden kann, weil bei Letzteren das Mischungsverhältnis genau eingehalten werden muss.
Eine Absenkung des Katalysatorgehaltes vor dem Abstellen der Anlage zu Reparaturzwecken verlängert darüber hinaus die Zeit, die zur Wiederaufnahme der Produktion verstreichen darf.

Beim erfindungsgemäßen Verfahren zur Herstellung von härtbaren Organopolysiloxanmassen wird vorzugsweise aus einem Fass eine weiche (niederviskose) Masse und aus einem anderen Fass eine härtere (höherviskose) Masse in einem beliebigen Mischungsverhältnis zum statischen Mischer gepumpt, und dass (D) und/oder (B) über eine Pumpstation zudosiert werden.

### Ausführungsbeispiele

Grundmasse: 70 % Polydimethylsiloxan (PDMS) **mit einer Viskosität von 20000 mPas (bei Raumtemperatur)** mit endständigen Vinylgruppen und 30 % mit Silazan hydrophobierte Kieselsäure mit einer spezifischen Oberfläche von 300 m2/g werden homogen vermischt.

### Beispiel 1:

Zu 100 Teilen Grundmasse werden 0,3 Teile Trimethylsilanol, 1,75 Teile Si-H-Vernetzer (mit 0,46 % H-Funktionen und einer Viskosität von 100 mPas), 0,08 Teile Ethinylcyclohexanol gegeben.

Diese Mischung wird in 20 1 Fässer abgefüllt.

Die Fässer werden in die Pumpstation der ENGEL LSR Maschine eingespannt. In die Farblinie (an der üblicherweise nur Farbmasterbatches dosiert werden) der Maschine wird eine Zubereitung des Platinkatalysators (1,3-Divinyl-1,1,3,3-tertramethyldisiloxan-Pt-komplex in Siliconöl mit einer Viskosität von 500 mPas; Pt-Gehalt 0,1 %) eingefüllt und in der Höhe von 1,5 % auf 100 % Mischung zum statischen Mischer gepumpt.

Im statischen Mischer werden 100 Teile Mischung und 1,5 Teile Platinkatalysator miteinander vermischt, homogenisiert und danach in den Spritzzylinder der Spritzgussmaschine gedrückt. Anschließend erfolgt der Spritzzyklus. Als Spritzgussteil wurde ein Trinksauger mit einem EMDE Werkzeug hergestellt. Die Zykluszeit beträgt 10 s.

### Beispiel 2:

Zu 100 Teilen Grundmasse werden 0,3 Teile Trimethylsilanol, 1,5 Teile einer Zubereitung des Platinkatalysators (Beispiel 1), 0,08 Teile Ethinylcyclohexanol gegeben.

Diese Mischung wird in 20 1 Fässer abgefüllt.

Die Fässer werden in die Pumpstation der ENGEL LSR Maschine eingespannt. In die Farblinie (an der üblicherweise nur Farbmasterbatches dosiert werden) der Maschine wird der Si-H-Vernetzer (mit 0,46 % H-Funktionen und einer Viskosität von 100 mPas) zu 1,75 % auf 100 % Mischung zum statischen Mischer gepumpt.

Im statischen Mischer werden 100 Teile Mischung und 1,75 Teile Si-H-Vernetzer miteinander vermischt, homogenisiert und danach in den Spritzzylinder der Spritzgussmaschine gedrückt. Anschließend erfolgt der Spritzzyklus. Als Spritzgussteil wurde ein Trinksauger mit einem EMDE Werkzeug hergestellt. Die Zykluszeit beträgt 20 s.

Durch Variation des Vernetzergehaltes +-10 % lassen sich die mechanischen Eigenschaften variieren.
Durch Zugabe eines stark Si-H-haltigen Vernetzers läßt sich zusätzlich die Zykluszeit variieren.

### Vergleichsbeispiel:

Die A-Komponente enthält 100 Teile Grundmasse, 3 Teile Pt-Katalysator, 0,3 Teile Trimethylsilanol.
Die B-Komponente enthält 100 Teile Grundmasse, 3,5 Teile Si-H Vernetzer, 0,16 Teile Ethinylcyclohexanol.

A- und B-Komponente desselben LSR werden traditionell an derselben Anlage im Mischungsverhältnis 1:1 verarbeitet. Die Zykluszeit beträgt 20 s. Es bestehen keinerlei Variationsmöglichkeiten bezüglich Zykluszeit und/oder Mechanik.

## Patentansprüche

1. Verfahren zur Herstellung von härtbaren Organopolysiloxanmassen, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen,
(D) Katalysator,
**dadurch gekennzeichnet, dass** (A) und (B) oder (A) und (D) in einer Menge von 100 Gewichtsteilen zunächst in einen Behälter abgefüllt werden und später werden entweder 0,3 bis 5 Gewichtsteile (D), bezogen auf die Katalysatorformulierung, zu (A) und (B) oder 0,3 bis 5 Gewichtsteile (B) zu (A) und (D) in den Mischer einer kunststoffverarbeitenden Maschine zudosiert werden.

2. Verfahren zur Herstellung von härtbaren Organopolysiloxanmassen nach Anspruch 1, **dadurch gekennzeichnet, dass** als Katalysator 1,3-Divinyl-1,1,3,3-tertramethyldisiloxan-Pt-komplex, Bis(alkinyl)(1,5-cyclooctadien)-platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe verwendet wird.

3. Verfahren zur Herstellung von härtbaren Organopolysiloxanmassen nach Anspruch 1 oder 2 **dadurch gekennzeichnet, dass** (D) und (B) über eine Pumpstation zudosiert wird.

4. Verfahren zur Herstellung von härtbaren Organopolysiloxanmassen nach Anspruch 1, **dadurch gekennzeichnet, dass** die kunststoffverarbeitende Maschine eine Spritzgussmaschine ist.
